# EUROPÄISCHE PATENTANMELDUNG

(11) **EP 2 581 164 A1**
(43) Veröffentlichungstag der Anmeldung: **17.04.2013**
(21) Anmeldenummer: 11185208.3
(22) Anmeldetag: 14.10.2011
(51) Int. Cl.: B23K 35/32, B23P 6/04, F01D 5/00

(54) **Verfahren zum Reparieren von Oberflächenschäden einer Strömungsmaschinenkomponente**

(71) Anmelder: Siemens Aktiengesellschaft, 80333 München (DE)
(72) Erfinder: Barnikel, Jochen, 45470 Mülheim an der Ruhr (DE); Gollerthan, Susanne, 44787 Bochum (DE); Krappitz, Harald, 73230 Kirchheim unter Teck (DE); Reinkensmeier, Ingo, 58730 Fröndenberg (DE)

(57) **Zusammenfassung**

Ein Verfahren zum Reparieren von Oberflächenschäden einer Strömungsmaschinenkomponente, welche einen Titan aufweisenden Grundwerkstoff (7) aufweist, weist folgende Schritte auf: Mischen eines Lots, das eine Titan aufweisende Legierung und ein Pulver aufweist, welches in dem Lot verteilt ist und den Grundwerkstoff aufweist; Aufbringen des Lots auf Stellen der Strömungsmaschinenkomponente, an denen sich die Oberflächenschäden befinden; Einbringen einer Wärmemenge in das Lot und in die Strömungsmaschinenkomponente, so dass die Legierung flüssig wird und dadurch die Stellen benetzt werden; Abkühlen des Lots, so dass die Legierung fest wird.

## Beschreibung

Das Verfahren betrifft ein Verfahren zum Reparieren von Oberflächenschäden einer Strömungsmaschinenkomponente.

Eine Gasturbine weist einen Verdichter und eine Turbine auf. Sowohl im Verdichter als auch in der Turbine kommen Schaufeln zum Einsatz, unterschieden werden dabei feststehende Leitschaufeln und rotierende Laufschaufeln.

Als Material für die Laufschaufeln werden unter anderem Titanlegierungen eingesetzt, welche eine hohe Festigkeit, eine niedrige Dichte sowie eine gute Korrosionsbeständigkeit haben. Nachteilig haben die Titanlegierungen eine hohe Kerbempfindlichkeit und eine hohe Rissempfindlichkeit.

Insbesondere die Laufschaufeln sind verschiedenen Verschleißprozessen ausgesetzt, z.B. ein Verschleiß durch Reibung oder durch Oxidation. Speziell in einer Dampfturbine tritt als Verschleißprozess eine Tropfenschlagerosion auf. In der Dampfturbine bilden sich Nebeltröpfchen aus Wasser, die von den Leitschaufeln eingefangen werden, dort akkumulieren und von den Austrittskanten der Leitschaufeln als Wassertropfen abreißen. Die Wassertropfen haben eine geringe Absolutgeschwindigkeit, aber aufgrund der Rotation der Laufschaufeln haben sie eine große Relativgeschwindigkeit zu den Laufschaufeln. Schlagen die Wassertropfen mit ihrer großen Relativgeschwindigkeit auf die Laufschaufeln auf, so führt dies zu einer Bildung von Kerben auf der Oberfläche der Laufschaufeln.

Für eine Reduzierung der Tropfenschlagerosion stehen verschiedene Verfahren zur Auswahl. Auf der Oberfläche der Laufschaufel kann eine gegen Tropfenschlagerosion beständige Schicht durch thermisches Spritzen aufgetragen werden. Des Weiteren kann eine harte Schicht auf die Oberfläche der Laufschaufel durch Schweißen aufgebracht werden. Jedoch erhöht sich durch die genannten Verfahren nachteilig die Rissempfindlichkeit der Laufschaufeln, insbesondere an den Grenzflächen zwischen der Titanlegierung und der harten Schicht, wodurch die Lebensdauer der Laufschaufeln reduziert wird. Weiterhin ist nachteilig, dass die Schichten nach einer Beschädigung durch Tropfenschlagerosion nicht wieder auf die Laufschaufel aufgebracht werden können, weil die genannten Verfahren eine glatte Oberfläche erfordern.

Aufgabe der Erfindung ist es, ein Verfahren zum Reparieren von Oberflächenschäden einer Strömungsmaschinenkomponente und eine mit dem Verfahren reparierte Strömungsmaschinenkomponente zu schaffen, wobei das Verfahren einfach und wiederholt anwendbar ist sowie die Strömungsmaschinenkomponente eine lange Lebensdauer hat.

Das erfindungsgemäße Verfahren zum Reparieren von Oberflächenschäden einer Strömungsmaschinenkomponente, welche einen Titan aufweisenden Grundwerkstoff aufweist, weist folgende Schritte auf: Mischen eines Lots, das eine Titan aufweisende Legierung und ein Pulver aufweist, welches in dem Lot verteilt ist und den Grundwerkstoff aufweist; Aufbringen des Lots auf Stellen der Strömungsmaschinenkomponente, an denen sich die Oberflächenschäden befinden; Einbringen einer Wärmemenge in das Lot und in die Strömungsmaschinenkomponente, so dass die Legierung flüssig wird und dadurch die Stellen benetzt werden; Abkühlen des Lots, so dass die Legierung fest wird.

Dadurch, dass sowohl die Legierung als auch der Grundwerkstoff Titan aufweisen und der Legierung ein Pulver beigemischt wird, welches den Grundwerkstoff aufweist, wird das Lot dem Grundwerkstoff ähnlich in Bezug auf seine physikalischen Eigenschaften, so dass keine scharfen metallurgischen Kerben entstehen und das Lot vorteilhaft gut an den Grundwerkstoff anbindet. Insbesondere bei Laufschaufeln können im Betrieb der Strömungsmaschine durch Fliehkräfte oder durch Schwingungen an der Grenzfläche zwischen dem Grundwerkstoff und dem Lot Risse entstehen. Durch die gute Anbindung des Lots an den Grundwerkstoff und die Vermeidung der scharfen metallurgischen Kerben wird die Bildung der Risse vermindert, wodurch sich vorteilhaft eine lange Lebensdauer der Strömungsmaschinenkomponente ergibt.

Mit dem erfindungsgemäßen Verfahren ist es möglich, eine Vielzahl an Oberflächenschäden, wie z.B. Risse oder Oberflächenabtragungen, zu reparieren. Indem die Legierung flüssig wird, kann sie vorteilhaft in Risse, Kerben, Mulden und Krater eindringen und diese ausfüllen. Eine Voraussetzung für die Reparatur von Rissen ist, dass die Risse frei von Oxiden sind. Denkbar sind neben den aufgezählten Geometrien auch weitere beliebige Geometrien von Oberflächenabtragungen. Das Verfahren ist vorteilhaft einfach und auf beliebige Geometrien von Strömungsmaschinenkomponenten anwendbar. Vorteilhaft kann die ursprüngliche Oberflächenkontur der Strömungsmaschinenkomponente nach einer Erosion wiederhergestellt werden, selbst dann, wenn verschiedene Tiefen von Erosion vorliegen. Ferner kann das Verfahren vorteilhaft wiederholt angewendet werden. Weist die Strömungsmaschinenkomponente ein älteres Lot auf, so wird es in dem Verfahren geschmolzen und verbindet sich mit dem neu aufgebrachten Lot.

Bevorzugtermaßen wird das Lot so gemischt, dass das Massenverhältnis von der Legierung zu dem Pulver minimal 3:7 und maximal 7:3 ist. Der Grundwerkstoff weist bevorzugt eine Titanlegierung, insbesondere TiA16V4, reines Titan und/oder reines Titan mit Zusatzstoffen, insbesondere Kohlenstoff als Zusatzstoff, auf. Es ist bevorzugt, dass das Lot so hergestellt wird, dass es eine Paste, ein vorgesintertes Material (engl. "presintered preforms, PSP") oder ein Band, insbesondere ein klebendes Band, ist. Dadurch kann das Lot vorteilhaft gezielt lokal auf die von der Erosion betroffenen Stellen der Strömungsmaschinenkomponente aufgetragen werden.

Die Zusammensetzung der Legierung wird bevorzugt so gewählt, dass die Schmelztemperatur der Legierung niedriger als die Beta-Transus-Temperatur des Grundwerkstoffs ist. Die Beta-Transus-Temperatur von reinem Titan liegt bei ca. 880°C, von TiA16V4 liegt sie bei ca. 960°C bis 985°C. Unterhalb dieser Temperatur ist die Gitterstruktur des Titans eine hexagonal dichteste Kugelpackung, oberhalb dieser Temperatur bildet sich eine kubisch raumzentrierte Gitterstruktur aus. Ein Wechsel der Gitterstruktur verkürzt nachteilig die Lebensdauer der Strömungsmaschinenkomponente. Indem die Schmelztemperatur der Legierung unterhalb der Beta-Transus-Temperatur liegt, wird der Wechsel der Gitterstruktur des Grundwerkstoffs vermieden, wodurch die Lebensdauer der Strömungsmaschinenkomponente vorteilhaft lang ist.

Die Legierung ist bevorzugt ein Hartlot, insbesondere mit einer Schmelztemperatur zwischen 750°C und 950°C. Das Hartlot ist vorteilhaft beständig gegen eine Tropfenschlagerosion.

Es ist bevorzugt, dass das Lot nichtmetallische, halbmetallische und/oder keramische Partikel aufweist, dessen Bestandteile durch Diffusionsvorgänge in der flüssigen Legierung eingebunden werden und in einer chemischen Reaktion mit der Legierung einen Hartstoff ausbilden. Die Partikel weisen bevorzugt kohlenstoffhaltige Verbindungen, insbesondere Graphit, auf und der Hartstoff Titancarbid wird aus dem Kohlenstoff und der Legierung gebildet. Bei einem Auftreten von Tropfenschlagerosion kann die Legierung zerstört werden, wodurch das Pulver nachteilig freigelegt wird. Dadurch, dass die Legierung hart ist, ist sie beständig gegen die Tropfenschlagerosion. Durch die Ausbildung des Hartstoffs in der chemischen Reaktion wird die Legierung vorteilhaft härter, wodurch die Lebensdauer der Strömungsmaschinenkomponente vorteilhaft lang ist. Insbesondere das durch die Reaktion von Graphit entstehende Titancarbid hat eine vorteilhaft hohe Festigkeit. Dadurch, dass sich die Partikel zumindest teilweise auflösen, verändern sie sich durch Diffusionsvorgänge und es bilden sich Zonen aus dem Hartstoff aus, die größer als die Partikel sind.

Die Partikel sind bevorzugt plättchenförmig und/oder kugelförmig. Die Wärmemenge und deren Einbringzeit werden bevorzugt derart bestimmt, dass die Partikel in der chemischen Reaktion umgesetzt werden. Die zur Umsetzung der Partikel benötigte Wärmemenge und Einbringzeit hängen von der Größe der Partikel sowie von dem Massenverhältnis aus der Legierung und den Partikeln ab.

Die Wärmemenge und deren Einbringzeit werden bevorzugt derart bestimmt, dass die aufgelösten Partikel teilweise durch Diffusion in den Grundwerkstoff gelangen und dort unter Ausbildung eines Hartstoffs mit dem Grundwerkstoff eine chemische Reaktion eingehen. Dabei gelangt auch die Legierung teilweise in den Grundwerkstoff. Analog dazu gelangt durch Diffusion Material aus dem Grundwerkstoff in die Legierung. Durch die Diffusion und indem der Hartstoff auch in dem Grundwerkstoff gebildet wird gibt es keine sprunghaften Unterschiede mehr in den Eigenschaften, wie z.B. dem Elastizitätsmodul oder der Härte, zwischen dem Grundwerkstoff, dem Hartstoff und der Legierung, wodurch vorteilhaft scharfe metallurgische Kerben vermieden und die Bildung von Rissen zwischen dem Grundwerkstoff und der Legierung unterbunden ist.

Die Wärmemenge und deren Einbringzeit werden bevorzugt so bestimmt, dass die Temperaturen des Lots und der Strömungsmaschinenkomponente niedriger als die Beta-Transus-Temperatur des Grundwerkstoffs sind. Dadurch kann vorteilhaft ein Wechsel der Gitterstruktur des Grundwerkstoffs vermieden werden.

Die erfindungsgemäße Strömungsmaschinenkomponente weist eine Reparaturschicht auf, die mit dem erfindungsgemäßen Verfahren hergestellt ist.

Im Folgenden wird das erfindungsgemäße Verfahren zum Reparieren von Oberflächenschäden einer Strömungsmaschinenkomponente anhand der beigefügten schematischen Zeichnungen erläutert. Es zeigt:
- Figur 1: einen Schnitt eines Oberflächebereichs einer neuen Strömungsmaschinenkomponente mit einschlagenden Tropfen,
- Figur 2: einen Schnitt des Oberflächenbereichs nach Tropfenschlagerosion und
- Figur 3: einen Schnitt des Oberflächenbereichs nach Reparieren durch das erfindungsgemäße Verfahren.

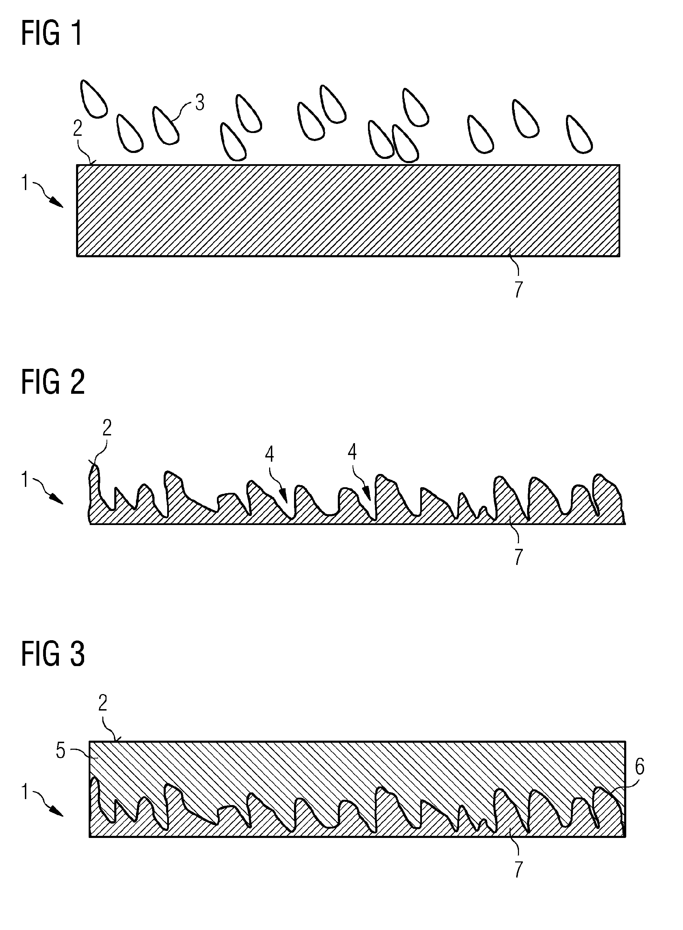

Eine Strömungsmaschinenkomponente, wie z.B. eine Laufschaufel einer Dampfturbine, weist einen Oberflächenbereich 1 auf. Wie es aus Figur 1 ersichtlich ist, weist der Oberflächenbereich 1 einen Grundwerkstoff 7 sowie eine oben liegende Oberfläche 2 auf. Vor Beginn der Tropfenschlagerosion ist die Oberfläche 2 glatt. Eine Mehrzahl an in der Regel gleichförmigen Tropfen 3 ist gezeigt, wobei die Tropfen 3 an ihrer Vorderseite breit und konvex geformt sind, während sie zu ihrer Rückseite hin spitz zulaufen. Die Flugrichtung und damit der Einschlagwinkel der Tropfen 3 auf der Oberfläche 2 hängt von der Geometrie der Laufschaufeln ab und kann, wie beispielsweise in Figur 1 dargestellt, spitz sein. Sobald die Tropfen auf der Oberfläche 2 auftreffen, bildet sich an der Oberfläche 2 eine Tropfenschlagerosion aus.

Wie es in Figur 2 gezeigt ist, ist die Oberfläche 2 des Oberflächenbereichs 1 nach der Tropfenschlagerosion zerklüftet und der Oberflächenbereich 1 weist eine Mehrzahl an Kerben 4 auf. Die Kerben 4 sind im Wesentlichen in die Flugrichtung der Tropfen 3 aus Figur 1 orientiert und die Kerben 4 haben unterschiedliche Tiefen. Denkbar sind jedoch beliebige Formen von Erosion, wie z.B. Mulden oder Risse. Die Strömungsmaschinenkomponente ist aufgrund des Materialabtrags durch die Tropfenschlagerosion schmaler als in Figur 1.

Wie es aus Figur 3 ersichtlich ist, ist auf den erodierten Oberflächenbereich 1 aus Figur 2 eine Reparaturschicht 5 aus einem Lot aufgetragen. Denkbar ist, dass das Lot als ein klebendes Band auf den erodierten Oberflächenbereich 1 aufgebracht wurde. Indem das Lot durch eine Einbringung von Wärme schmelzflüssig wird, hat es die Kerben 4 vollständig ausgefüllt und nach Abkühlen und Erstarren ist die Reparaturschicht 5 fertig gestellt. Das Lot und damit die Reparaturschicht 5 weisen dabei eine Legierung und ein nicht dargestelltes Pulver, welches den Grundwerkstoff aufweist, auf. Zwischen dem Grundwerkstoff 7 und der Reparaturschicht 5 ist eine Grenzfläche 6 ausgebildet. Die Grenzfläche ist durch die gute Anbindung von der Reparaturschicht 6 an den Grundwerkstoff 7 beständig gegen die Bildung von Rissen. Die ursprüngliche Oberflächenkontur der Strömungsmaschinenkomponente ist durch das Verfahren wiederhergestellt, wobei prinzipiell beliebig geformte Oberflächen 2 der Strömungsmaschinenkomponente wiederhergestellt werden können.

Denkbar ist, dass sich an der Grenzfläche 6 eine Diffusionsschicht ausbildet, indem Material durch Diffusion von Reparaturschicht 5 in den Grundwerkstoff 7 gelangt, bzw. indem Material von dem Grundwerkstoff 7 in die Reparaturschicht 5 gelangt. Weiterhin ist denkbar, dass zusätzlich zu dem Pulver mit dem Grundwerkstoff in dem Lot Partikel aus Graphit verteilt sind, die sich während der Wärmezufuhr in der Legierung des Lots lösen und in einer chemischen Reaktion mit der Legierung den Hartstoff Titancarbid bilden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Reparieren von Oberflächenschäden einer Strömungsmaschinenkomponente, welche einen Titan aufweisenden Grundwerkstoff (7) aufweist, mit den Schritten:
- Mischen eines Lots, das eine Titan aufweisende Legierung und ein Pulver aufweist, welches in dem Lot verteilt ist und den Grundwerkstoff aufweist;
- Aufbringen des Lots auf Stellen der Strömungsmaschinenkomponente, an denen sich die Oberflächenschäden befinden;
- Einbringen einer Wärmemenge in das Lot und in die Strömungsmaschinenkomponente, so dass die Legierung flüssig wird und dadurch die Stellen benetzt werden;
- Abkühlen des Lots, so dass die Legierung fest wird.

2. Verfahren gemäß Anspruch 1,
wobei das Lot so gemischt wird, dass das Massenverhältnis von der Legierung zu dem Pulver minimal 3:7 und maximal 7:3 ist.

3. Verfahren gemäß Anspruch 1 oder 2,
wobei der Grundwerkstoff (7) eine Titanlegierung, insbesondere TiA16V4, reines Titan und/oder reines Titan mit Zusatzstoffen, insbesondere Kohlenstoff als Zusatzstoff, aufweist.

4. Verfahren gemäß einem der Ansprüche 1 bis 3,
wobei das Lot so hergestellt wird, dass es eine Paste, ein vorgesintertes Material oder ein Band, insbesondere ein klebendes Band, ist.

5. Verfahren gemäß einem der Ansprüche 1 bis 4,
wobei die Zusammensetzung der Legierung so gewählt wird, dass die Schmelztemperatur der Legierung niedriger als die Beta-Transus-Temperatur des Grundwerkstoffs ist.

6. Verfahren gemäß einem der Ansprüche 1 bis 5,
wobei die Legierung ein Hartlot ist, insbesondere mit einer Schmelztemperatur zwischen 750°C und 950°C.

7. Verfahren gemäß einem der Ansprüche 1 bis 6,
wobei das Lot nichtmetallische, halbmetallische und/oder keramische Partikel aufweist, dessen Bestandteile durch Diffusionsvorgänge in der flüssigen Legierung eingebunden werden und in einer chemischen Reaktion mit der Legierung einen Hartstoff ausbilden.

8. Verfahren gemäß Anspruch 7,
wobei die Partikel kohlenstoffhaltige Verbindungen, insbesondere Graphit, aufweisen und der Hartstoff Titancarbid aus dem Kohlenstoff und der Legierung gebildet wird.

9. Verfahren gemäß Anspruch 7 oder 8,
wobei die Partikel plättchenförmig und/oder kugelförmig sind.

10. Verfahren gemäß einem der Ansprüche 7 bis 9,
wobei die Wärmemenge und deren Einbringzeit derart bestimmt werden, dass die Partikel in der chemischen Reaktion umgesetzt werden.

11. Verfahren gemäß einem der Ansprüche 7 bis 10,
wobei die Wärmemenge und deren Einbringzeit derart bestimmt werden, dass die aufgelösten Partikel teilweise durch Diffusion in den Grundwerkstoff gelangen und dort unter Ausbildung eines Hartstoffs mit dem Grundwerkstoff (7) eine chemische Reaktion eingehen.

12. Verfahren gemäß einem der Ansprüche 7 bis 11,
wobei die Wärmemenge und deren Einbringzeit so bestimmt werden, dass die Temperaturen des Lots und der Strömungsmaschinenkomponente niedriger als die Beta-Transus-Temperatur des Grundwerkstoffs (7) sind.

13. Strömungsmaschinenkomponente mit einer Reparaturschicht (5), wobei die Reparaturschicht (5) nach einem Verfahren gemäß einem der Ansprüche 1 bis 12 hergestellt ist.
